# EUROPÄISCHE PATENTSCHRIFT

(11) **EP 2 911 363 B1**
(45) Veröffentlichungstag und Bekanntmachung des Hinweises auf die Patenterteilung: **06.09.2017**
(21) Anmeldenummer: 14199236.2
(22) Anmeldetag: 19.12.2014
(51) Int. Cl.: H04L 29/06, H04W 12/08, H04W 12/10, H04L 29/08, H04W 48/18, H04W 88/06

(54) **FUNKGERÄT MIT ZWEI FUNKEINHEITEN UND VERFAHREN ZUM ÜBERTRAGEN VON INFORMATIONEN**
RADIO DEVICE WITH TWO RADIO UNITS AND METHOD FOR TRANSMITTING INFORMATION
APPAREIL RADIO DOTÉ DE DEUX ÉMETTEURS-RADIO ET PROCÉDÉ DE TRANSMISSION D'INFORMATIONS

(30) Priorität: 20.02.2014 DE 102014203089
(43) Veröffentlichungstag der Anmeldung: 26.08.2015
(73) Patentinhaber: Rohde & Schwarz GmbH & Co. KG, 81671 München (DE)
(72) Erfinder: Langguth, Torsten, Dr., 82008 Unterhaching (DE); Ebersberger, Michael, 82140 Olching (DE); Storn, Rainer, Dr., 85551 Kirchheim (DE)
(74) Vertreter: Körfer, Thomas

(56) Entgegenhaltungen:
- EP-A1- 2 544 383
- EP-B1- 2 245 744
- DE-A1-102007 033 914
- US-A1- 2008 076 385

## Beschreibung

Die Erfindung betrifft ein Funkgerät mit einer ersten Funkeinheit und einer zweiten Funkeinheit sowie ein Verfahren zum Übertragen von Informationen. Die Erfindung betrifft insbesondere ein Funkgerät für die Luftfahrt.

Heutzutage müssen Funkgeräte mehrere Stufen von Funktionssicherheit aufweisen. Dabei ist zu unterscheiden zwischen hochsicheren Architekturen für Computersysteme zum Erzeugen einer Informationssicherheit (englisch Multiple Independent Levels of Security, kurz: MILS) und den erfindungsgemäß vorzusehenden Stufen an Sicherheit für Funkgeräte (englisch Multiple Independent Levels of Safety, kurz: MILSF). Funkgeräte mit MILSF finden sich vor allem in der Avionik und bei Flugverkehrskontrollen (englisch Air Traffic Control, kurz: ATC).

Die MILSF sind in mehreren technischen Standardisierungen vorgeschrieben. Beispiele hierfür sind insbesondere die Standards IEC62304 oder DIN EN60601 für die Medizintechnik; der Standard EN50128 für die Bahntechnik; der Standard IEC61508 für die Industrie; der Standard ISO 26262 für die Automobilindustrie; die Standards DO-178B/C, ID-12B/C oder DO-254 für die Avionik; sowie die Standards DO-278A oder ID-109A für die ATC.

Alle diese Standards definieren verschiedene Stufen an Sicherheit, die ein Funkgerät aufweisen muss, um spezifische Funktionalität bereitzustellen. Entsprechend der spezifischen Funktion ist die Sicherheit des Fahrzeugs oder Flugzeugs, in dem das Funkgerät verbaut ist, mehr oder weniger gefährdet. Je nach den Gefährdungsauswirkungen werden unterschiedliche Anforderungen an den Entwicklungsprozess gestellt. Ein Funkgerät, welches nach einem der angeführten Standards betrieben wird, muss diese Stufen an Sicherheit vorweisen können. Abhängig von den Stufen sind verschiedene Entwicklungsmethoden erlaubt bzw. vorgeschrieben und es entstehen daraufhin unterschiedliche Dokumentations- und Nachprüf-Pflichten. Diese Stufen werden insbesondere in der Luftfahrt standardgemäß auch als Entwicklungssicherheitsstufe (englisch Design Assurance Level bezeichnet, kurz DAL). Dabei wird der Ausfall einer bestimmten Funktion des Funkgeräts entsprechend eines potentiell auftretenden Effekts bewertet. Je gravierender der auftretende Effekt sein kann, desto höher fällt der DAL aus, nachdem die betreffende Funktionalität des Funkgeräts zu evaluieren ist. Ein hoher Evaluierungslevel bedeutet insbesondere einen hohen Aufwand und damit hohe Kosten für die Entwicklung und Herstellung des Funkgeräts. Es ist daher prinzipiell wünschenswert ein Funkgerät mit einem hohen DAL zu evaluieren, während der Entwicklungsaufwand für das Funkgerät gering gehalten werden sollte.

Die Druckschrift EP2544383-A1 beschreibt ein modular aufgebautes Funkgerät, das in der Luftfahrt eingesetzt wird und daher rigorosen Zertifizierungsstandards entsprechen muss. In der DE 10 2007 033 914 A1 wird ein Funkgerät-System vorgeschlagen, welches modular aufgebaut ist. Dabei werden zwei Arten von Modulen unterschieden. Für eine erste Art von Modulen ist keine Zertifizierung von einer autorisierten Zulassungsbehörde notwendig. Eine zweite Art von Modulen umfasst ein Notfallfunkgerät, welches von einer autorisierten Zulassungsstelle zu zertifizieren ist, um für spezifische Anwendungen zugelassen zu werden.

Problematisch ist hierbei, dass das Modul, welches keine Zertifizierung aufweist, für eine Vielzahl von Anwendungen unzulässig ist, sodass diese Funkgerät-Systeme des Stands der Technik für Anwendungen insbesondere im Flugbetrieb, im Bahnbetrieb oder in der Medizintechnik nur bedingt eingesetzt werden können. Der interessierte Fachmann sei auch auf die Druckschrift EP2245744-B1 hingewiesen, in welcher ein Verfahren zur Verarbeitung von Funk-Paketen in einem Mehrmoden-SDR-Endgerät vorgestellt wird. Weiterhin soll das Funkgerät auch für zukünftige Funktionalitäten, beispielsweise einer neuen Verschlüsselungsmethode oder einer alternativen Wellenform, erweiterbar sein. Wird ein zertifiziertes Funkgerät erweitert, verliert es die Zertifizierung und muss neu für die Anwendung zugelassen werden. Dies ist mitunter zu aufwendig, sodass auf die Erweiterbarkeit des Funkgeräts verzichtet wird. Damit sind diese Funkgeräte aber nur bedingt zukunftstauglich und müssen zwangsläufig im Lauf der Zeit ersetzt werden.

Es ist daher die Aufgabe der Erfindung, ein Funkgerät und ein Verfahren zum übertragen von Informationen bereitzustellen, welches mit niedrigen Entwicklungskosten und geringen Zertifizierungskosten herstellbar ist, welches aber vielseitig anwendbar ist und zukunftstauglich ist. Das Funkgerät soll für zukünftige Anwendungen erweiterbar sein. Das Funkgerät soll auch unterschiedliche Standards erfüllen können.

Die genannte Aufgabe wird erfindungsgemäß durch das im Anspruch 1 beanspruchte Funkgerät gelöst. Vorteilhafte Weiterbildungen des erfindungsgemäßen Funkgeräts sind Gegenstand der auf Anspruch 1 rückbezogenen Unteransprüche. Überdies wird die genannte Aufgabe erfindungsgemäß durch das im Anspruch 11 beanspruchte Verfahren zum Übertragen von Informationen gelöst.

Vorteilhafte Weiterbildungen des erfindungsgemäßen Verfahrens sind Gegenstand der auf Anspruch 11 rückbezogenen Unteransprüche.

Insbesondere wird die Aufgabe durch ein Funkgerät mit einer ersten Funkeinheit und zumindest einer zweiten Funkeinheit gelöst, wobei die erste Funkeinheit eine zertifizierte Funktionalität aufweist, welche von einer autorisierten Zertifizierungsstelle zertifiziert ist. Erfindungsgemäß weist die zweite Funkeinheit eine zertifizierte Funktionalität auf, wobei die Funktionalität der zweiten Funkeinheit von der Funktionalität der ersten Funkeinheit verschieden ist und die Funktionalität der zweiten Funkeinheit ebenfalls von einer autorisierten Zertifizierungsstelle zertifiziert ist.

Die mit der Erfindung erzielten Vorteile bestehen insbesondere darin, dass das Funkgerät vollumfänglich zertifiziert ist und keine Module oder Einheiten aufweist, die nicht von einer autorisierten Zertifizierungsstelle zertifiziert worden sind. Um den Evaluierungsaufwand gering zu halten, ist das Funkgerät in zumindest zwei Funkeinheiten unterteilt. Die einzelnen Funkeinheiten sind entsprechend ihrer Funktionalität zertifiziert, wobei die verschiedenen Funkeinheiten unterschiedliche Funktionalitäten bereitstellen. Die Zertifizierungsstelle, welche die erste Funkeinheit zertifiziert hat, kann dabei unterschiedlich oder gleich der Zertifizierungsstelle der zweiten Funkeinheit sein.

Als Funktionalität wird bevorzugt eine für die Funkkommunikation benötigte Eigenschaft vorgesehen, insbesondere ein Verschlüsselungsalgorithmus, eine spezifische Wellenform und/oder eine spezifische Übertragungsart. Überdies wird als Funktionalität auch ein Betriebszustand bzw. Betriebsmodus des Funkgeräts angesehen, beispielsweise ein mehrstufiges Betriebsbereitschalten, englisch Standby, oder ein Zuhörmodus, welcher spezifischen Kriterien eines Standards entsprechen muss. Die Funktionalität ist dabei die Fähigkeit der Funkeinheit, eine bestimmte Funktion oder Gruppe von Funktionen zu erfüllen. Dies bezieht sich vor allem auf die Gebrauchstauglichkeit, sodass die erste Funkeinheit insbesondere eine simple Funkübertragung gewährleistet, während die zweite Funkeinheit eine komplexe Funkübertragung, beispielsweise mittels Verschlüsselung oder komplexen Wellenformen, ermöglicht.

Bevorzugt sind für die verschiedenen Funktionalitäten unterschiedliche Zertifikate vorgesehen. So ist es vorgesehen, dass die erste Funkeinheit ein erstes Zertifikat über die Funktionalität der ersten Funkeinheit aufweist, wohingegen die zweite Funkeinheit eine von dem Zertifikat der ersten Funkeinheit verschiedenes zweites Zertifikat über die Funktionalität der zweiten Funkeinheit aufweist.

Ein bevorzugter Gedanke der Erfindung beläuft sich darauf, dass in einer ersten Funkeinheit ein hohes Maß an Ausfallsicherheit und damit einhergehend ein geringes Maß an Komplexität der ersten Funkeinheit realisiert werden soll. Eine beispielhafte Funktionalität der ersten Funkeinheit ist dabei eine Notfunk-Eigenschaft. Dafür weist diese erste Funkeinheit ein Sicherheitszertifikat auf.

Alternativ ist eine zweite Funkeinheit vorzugsweise höherwertiger und komplexer aufgebaut ist, um komplexere Funkübertragungen realisieren zu können. Beispielhaft wird eine verschlüsselte Übertragung mit einer zweiten Funkeinheit durchgeführt. Derartig komplexe und hochsichere Funkübertragungsverfahren sind mittels eines zweiten Zertifikats zertifiziert, um die Vertrauenswürdigkeit dieser Funkeinheit anzuzeigen.

Vorzugsweise ist das Zertifikat der ersten Funkeinheit ein Sicherheitszertifikat. Dies wird insbesondere bei der Flugsicherheit für schlichte Funktionen, insbesondere einem Notfallbetrieb, benötigt. Bei Sicherheitszertifikaten sind Aktualisierungen immer mit einer Neuzertifizierung verbunden, die wiederum einen hohen Evaluierungsaufwand bedeuten.

In einer bevorzugten Ausgestaltung ist das Zertifikat der zweiten Funkeinheit ein Informationszertifikat. Dieses Zertifikat erfüllt die Common Criteria des sogenannten SCA-Zertifikats. Die "allgemeinen Kriterien für die Bewertung der Sicherheit von Informationstechnologie" (englisch "Common Criteria for Information Technology Security Evaluation", kurz: Common Criteria oder CC), sind ein internationaler Standard über die Kriterien der Bewertung und Zertifizierung der Sicherheit von Computersystemen im Hinblick auf die Datensicherheit und entsprechende unbefugte Manipulation von Daten. Der CC ist abzugrenzen vom Datenschutz und den Sicherheitszertifikat der ersten Funkeinheit. Die CC definieren sieben Stufen der Vertrauenswürdigkeit, EAL 1 bis 7, die die Korrektheit der Implementierung des betrachteten Systems bzw. die Prüftiefe beschreiben. Mit steigender Stufe der Vertrauenswürdigkeit steigen die Anforderungen an die Tiefe, in der der Hersteller sein Produkt beschreiben muss und mit dem das Produkt geprüft wird.

Hierbei ist es möglich, dass neue und insbesondere komplexe Wellenformen - die als Übertragungsverfahren stets neu entwickelt werden - in die zweite Funkeinheit des Funkgeräts integriert werden können, ohne dass das bereits erworbene Zertifikat per se ungültig wird. Das Informationszertifikat zeichnet sich dadurch aus, dass es eine spezielle Funktionalität anzeigt. Es ist insbesondere vorgesehen, dass das Zertifikat nach einer Erweiterung der zweiten Funkeinheit bezüglich seiner Funktionalität weiterhin seine Gültigkeit hat. Eine neue Funktionalität ist insbesondere eine neue Wellenform, die im Rahmen eines Service-Component-Architecture, kurz SCA, -Zertifikats nachgeladen wird.

Die erste Funkeinheit zeichnet sich bevorzugt dadurch aus, dass sie einen hohen DAL aufweist und dafür zugelassen ist. Dem gegenüber wird die zweite Funkeinheit mit einem Informationszertifikat ausgestattet. Somit ist in vorteilhafter Weise erreicht, dass alle Elemente des Funkgeräts zertifiziert und für einen spezifischen Betrieb, beispielsweise den Flugbetrieb, den Schifffahrtbetrieb, die Medizintechnik und/oder die Bahntechnik zugelassen sind. Die zweite Funkeinheit verfügt über eine Funktionalitätserweiterung.

Mittels des erfindungsgemäßen Funkgeräts ist es möglich, verschiedene Standards zu erfüllen. Somit kann das Funkgerät erfindungsgemäß für unterschiedliche Anwendungen betrieben werden, ohne neu zertifiziert zu werden. Die Entwicklungskosten können damit stark reduziert werden.

In einer bevorzugten Ausgestaltung weist jede Funkeinheit eine separate Antenne mit eigener Eingangsstufe auf. Dies kann insbesondere zum Erhalten einer Zertifizierung sinnvoll sein, um sicherzustellen, dass ein Funkkanal stets aufgebaut werden kann und die Funkeinheit physisch separiert funktioniert. Insbesondere kann dies für einen zertifizierten Notfallbetrieb gefordert sein.

In einer bevorzugten Ausgestaltung tauscht die erste Funkeinheit mit der zweiten Funkeinheit Informationen über eine gemeinsame Schnittstelle aus. Dabei wird mittels der ersten Funkeinheit die Funktionstüchtigkeit der zweiten Funkeinheit überprüft. In einem Fehlerfall der zweiten Funkeinheit kann so die erste Funkeinheit eine Notfallkommunikation aufrechterhalten. Dies erhöht die Sicherheit, dass eine Kommunikation mittels des Funkgeräts stets, insbesondere auch bei einem Defekt der zweiten Funkeinheit, möglich ist.

Bevorzugt ist ein Erweitern der Funktionalität der zweiten Funkeinheit vorgesehen. Das Erweitern der Funktionalität der zweiten Funkeinheit ist insbesondere notwendig, um zukünftige Wellenformen und/oder zukünftige Verschlüsselungsalgorithmen für die Übertragung von Informationen mittels des Funkgeräts zu gewährleisten. Somit ist die zweite Funkeinheit des Funkgeräts stets für neue Übertragungsverfahren geeignet und weist über dies eine Sicherheitszertifizierung auf. Es ist insbesondere vorgesehen, dass die Funktionalität der ersten Funkeinheit nicht verändert wird, um die Zulassung von der autorisierten Zertifikatsstelle nicht für ungültig erklären zu können.

Eine eigene Eingangsstufe pro Funkeinheit kann vorgesehen sein, wenn die Eingangsstufe für die erste Funkeinheit relativ einfach und hingegen die Eingangsstufe der zweiten Funkeinheit relativ komplex ausgestaltet ist. Somit kann die Eingangsstufe für die erste Funkeinheit kostengünstig hergestellt werden.

In einer bevorzugten Ausgestaltung weist das Funkgerät eine Ansteuerungsschnittstelle auf, worüber die erste Funkeinheit und auch die zweite Funkeinheit Ansteuerungsdaten empfangen und/oder versenden. Über dies ist auch eine gemeinsame Spannungsversorgung der Funkeinheiten 1 und 2 vorsehbar.

Insbesondere greifen die erste Funkeinheit und die zweite Funkeinheit bevorzugt auf gemeinsame Hardware-Ressourcen des Funkgeräts zu, wobei die erste Funkeinheit von der zweiten Funkeinheit mittels eines Software-Separations-Kernels voneinander funktional getrennt ist. Dieser Software-Separations-Kernel ist insbesondere ein Sicherheitsbaustein (englisch "Trusted Platform"), um alle Ressourcen insbesondere CPU, Speicher und Hardware-Abstraktionen vor nicht autorisiertem Zugriff und auch vor Zugriff der jeweils anderen Funkeinheit zu schützen. Insbesondere wird auch die Separation von internen Speicherbereichen und Prozessen in Speichern bzw. Zeitpartitionen erzielt. Der Separations-Kernel isoliert die Ressourcen für die jeweilige Funkeinheit. Der Separations-Kernel steuert die Informationsflüsse zwischen den einzelnen Partitionen und zwischen den Ressourcen in kontrollierter Weise, für den Fall, dass die Funkeinheit 1 und die Funkeinheit 2 lediglich als Software ausgestaltet sind.

Insbesondere weist eine der Funkeinheiten eine Steuereinheit auf, wobei die Steuereinheit den Hochfahrprozess und die Abschaltprozess des Funkgeräts steuert. Überdies kann die Steuereinheit auch von außen über einen Benutzer angesteuert werden. Die Funkeinheit, welche die Steuereinheit aufweist, wird insbesondere als Master im Funkgerät betrieben. Die Umschaltung zwischen der ersten Funkeinheit und der zweiten Funkeinheit erfolgt insbesondere mittels eines externen Steuersignals.

Enthält die zweite Funkeinheit eine Verschlüsselungseinheit, so wird vorzugsweise an der Anwenderschnittstelle sichergestellt, dass beim Umschalten von der zweiten Funkeinheit auf die erste Funkeinheit keine sensiblen Daten übertragen werden.

Weiterhin kann in der zweiten Funkeinheit eine Überwachungsschaltung (englisch Watch-Dog), eingebaut sein, der bei einer Störung oder einem Defekt der zweiten Funkeinheit automatisch auf die erste Funkeinheit umschaltet, um stets eine Funkkommunikation aufrechterhalten zu können. Alternativ wird von der ersten Funkeinheit auf die zweite Funkeinheit umgeschaltet, wenn ein Defekt der ersten Funkeinheit festgestellt worden ist.

Um die Herstellungskosten des Funkgeräts gering halten zu können, werden bevorzugt möglichst viele Bauteile im Funkgerät sowohl von der ersten Funkeinheit als auch von der zweiten Funkeinheit verwendet. Insbesondere ist die Ansteuerungsschnittstelle vorzugsweise derart ausgestaltet, dass sowohl die erste Funkeinheit als auch die zweite Funkeinheit Anwenderdaten über die gemeinsame Anwenderschnittstelle empfangen und senden kann. Dabei sind insbesondere Pegelwandlung, Audioverstärkung, Schnittstellentreiber sowie Verbindung zu Leuchtanzeigen gemeinsam auszugestalten.

Vorzugsweise sind die Eingangsstufen gemeinsam ausgestaltet, so dass insbesondere Cosite-Filter und Leistungsverstärker nicht zweifach aufgebaut sein müssen. Insbesondere ist ein FPGAs als digitaler Anteil in der Eingangsstufe vorgesehen. Hierbei sollte der Entwicklungsaufwand gegenüber einer Ressourcenverschwendung abgewogen werden.

Im Erfindungsgrundgedanken ist ebenfalls ein Verfahren zum Übertragen von Informationen mittels eines Funkgeräts vorgesehen. Das Verfahren umfasst die Verfahrensschritte: Erkennen einer für die Übertragung der Informationen geforderten Funktionalität; und Umschalten des Funkgeräts auf eine, für die geforderte Funktionalität geeignete Funkeinheit.

Die geforderte Funktionalität kann insbesondere eine Verschlüsselung, eine spezifische Wellenform, ein spezifisches Übertragungsverfahren und/oder eine spezielle Frequenz sein.

Insbesondere können die Funkeinheiten die Information in definierten Zeitschlitzen quasiparallel übertragen. Dabei greift die erste Funkeinheit auf einen ersten Speicherbereich zu, während die zweite Funkeinheit auf einen vom ersten Speicherbereich verschiedenen zweiten Speicherbereich zugreift. Dabei werden der erste Speicherbereich und der zweite Speicherbereich von einer Sicherheitsplattform angesteuert.

Vorzugsweise ist für das Funkgerät das Anklopfen bei bestehender Kommunikationsverbindung, das sogenannte Hailing, ermöglicht. Dabei ist eine bestehende Kommunikationsverbindung zwischen dem Funkgerät und einem zweiten Teilnehmer mittels der zweiten Funkeinheit aufgebaut. Hat ein an der Kommunikationsverbindung unbeteiligter Dritter das Bedürfnis, einem der beiden Kommunikationsteilnehmer eine Information zukommen zu lassen, so klopft er bei der bestehenden Kommunikationsverbindung an. Nun kann die bestehende Kommunikation verschlüsselt sein. Um nun den Kommunikationsabbau und Kommunikationsaufbau zum Dritten möglichst einfach zu ermöglichen, wird ein zweiter Kommunikationskanal mittels der ersten Funkeinheit zu dem nicht beteiligten Dritten aufgebaut, um die Informationen auszutauschen. Somit ist eine quasiparallele Kommunikation möglich ohne die Sicherheit zwischen dem ersten und dem zweiten Kommunikationspartner zu gefährden. Dieses Verfahren wird auch als Anklopf- oder Break-In-Verfahren bezeichnet.

Nachfolgend werden anhand von Figuren der Zeichnung die Erfindung, weitere Ausführungsformen und Vorteile der Erfindung beispielhaft näher erläutert, wobei die Figuren lediglich Ausführungsbeispiele der Erfindung zeigen. Gleiche Bestandteile in den Figuren werden mit gleichen Bezugszeichen versehen. Es zeigen:
- Fig. 1: ein Blockschaltbild eines ersten Ausführungsbeispiels eines erfindungsgemäßen Funkgeräts;
- Fig. 2: ein Blockschaltbild eines zur Fig. 1 alternatives Ausführungsbeispiels des erfindungsgemäßen Funkgeräts;
- Fig. 3: ein Ausführungsbeispiel einer erfindungsgemäßen zweiten Funkeinheit eines erfindungsgemäßen Funkgeräts;
- Fig. 4a: ein Ausführungsbeispiel zur Speichertrennung mittels eines erfindungsgemäßen Separations-Kernels im Funkgerät;
- Fig. 4b: eine erfindungsgemäße Prozesstrennung im Zeitmultiplexverfahren bei einem Separations-Kernel des erfindungsgemäßen Funkgeräts;
- Fig. 5: ein Verfahrensablaufdiagramm eines Ausführungsbeispiels eines erfindungsgemäßen Verfahrens zum Übertragen von Informationen.

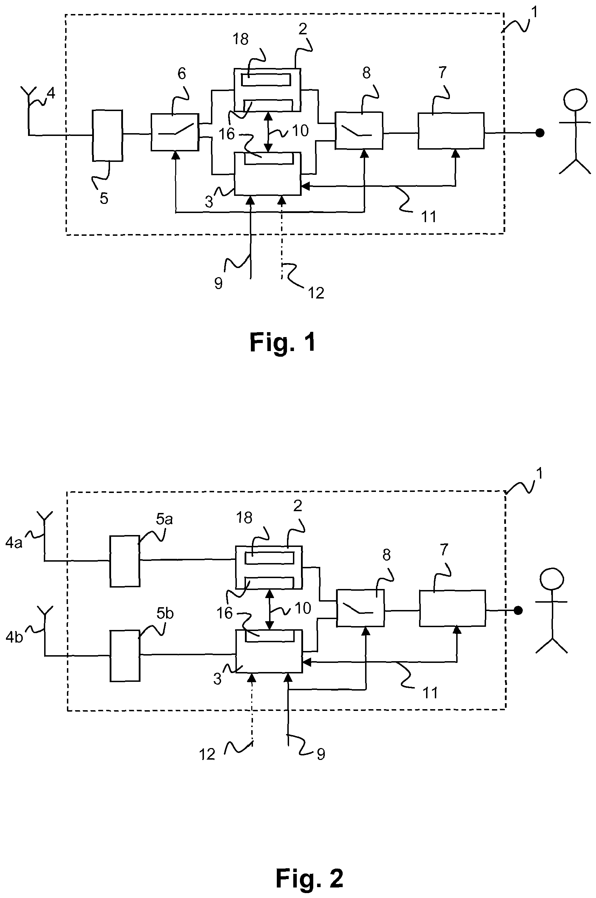

Fig. 1 zeigt ein erstes Ausführungsbeispiel eines erfindungsgemäßen Funkgeräts 1. Das Funkgerät 1 weist eine Antenne 4 sowie eine Schnittstelle zu einem Anwender auf. Die Antenne 4 ist mit einer Eingangsstufe 5 verbunden. Die Eingangsstufe 5 ist mit einer Frontend-Umschalteinheit 6 verbunden. Die Frontend-Umschalteinheit 6 ist mit der ersten Funkeinheit 2 bzw. der zweiten Funkeinheit 3 verbunden. Die erste Funkeinheit 2 und die zweite Funkeinheit 3 sind mit einer Schnittstellen-Umschalteinheit 8 verbunden. Der gemeinsame Ausgang der Schnittstellen-Umschalteinheit 8 ist mit der Ansteuerungsschnittstelle 7 verbunden, welche wiederum symbolisch zu einem Anwender geschaltet ist. Die Funkeinheit 2 und die zweite Funkeinheit 3 weisen jeweils eine gemeinsame Schnittstelle 16 auf. Über die gemeinsame Schnittstelle 16 erfolgt ein Informationsaustausch 10. Mittels des Informationsaustauschs 10 können eine Fehlfunktion einer Funkeinheit 2, 3 der jeweils anderen Funkeinheit 2, 3 mitgeteilt oder von dieser herausgefunden werden. Die erste Funkeinheit 2 weist über dies eine Steuereinheit 18 auf. Die Steuereinheit 18 ist insbesondere für einen Hochfahrprozess sowie einen Abschaltprozess des gesamten Funkgeräts 1 verantwortlich. Die Funkeinheit 2, die die Steuereinheit 18 aufweist, wird als Master-Funkeinheit betrieben.

Die Anzahl der Funkeinheiten ist erfindungsgemäß nicht beschränkt. Insbesondere kann vorgesehen sein, weitere Funkeinheiten im Funkgerät 1 vorzusehen.

Die erste Funkeinheit 2 ist durch eine autorisierte Zertifizierungsstelle mit einem Zertifikat ausgestattet. Das Zertifikat ist insbesondere ein Sicherheitszertifikat. Überdies ist die zweite Funkeinheit 3 mit einem, vom ersten Zertifikat verschiedenen, zweiten Zertifikat einer autorisierten Zertifizierungsstelle zertifiziert worden. Das Zertifikat der zweiten Funkeinheit 3 ist insbesondere ein Informationszertifikat.

Es ist vorgesehen, dass die erste Funkeinheit 2 eine einfache Funktionalität aufweist. Diese Funktionalität unterscheidet sich von der Funktionalität der zweiten Funkeinheit 3. Die erste Funkeinheit 2 dient insbesondere der Herstellung und Aufrechterhaltung einer ATC und stellt überdies ein Notfallfunkgerät dar. Diese Art von Notfallfunkgeräten muss in einem hohen Maß ausfallsicher sein und weist entsprechend einen hohen DAL auf. Jegliche Veränderung an dieser Funkeinheit 2, insbesondere eine Aktualisierung oder Erweiterung der Funktionalität würde einen Verlust des Zertifikats bedeuten, wodurch das Funkgerät für eine spezifische Anwendung, insbesondere die Luftfahrt oder die Schifffahrt, nicht mehr zugelassen wäre.

Überdies ist es notwendig, ein Funkgerät 1 stets mit neusten Kommunikationsmitteln und Übertragungsverfahren auszugestalten. Es ist daher insbesondere notwendig, neueste Verschlüsselungstechniken und auch verbesserte Wellenformen in das erfindungsgemäße Funkgerät 1 zu integrieren. Um nun die Zertifizierung für eine spezifische Anwendung nicht zu verlieren, ist erfindungsgemäß vorgesehen, die zu aktualisierenden Funktionalitäten in einer zweiten Funkeinheit 3 unterzubringen. Die Aktualisierung kann insbesondere über ein Datenschnittstellensignal 12 an die zweite Funkeinheit 3 bereitstellt werden. Die Zertifizierung der zweiten Funkeinheit 3 geht bei Einhaltung von Zertifizierungskriterien hinsichtlich der Erweiterung der Funktionalität nicht verloren. Derartiges ist insbesondere durch eine sogenannte SCA-Zertifizierung ermöglicht.

Alternativ ist vorgesehen, die erste Funkeinheit 2 für einen ersten oben genannten Standard zu zertifizieren, während die zweite Funkeinheit 3 für einen vom Standard der ersten Funkeinheit 2 verschiedenen zweiten oben genannten Standard zertifiziert wird. Somit kann das Funkgerät 1 für verschiedene Anwendungen verwendet werden, ohne dass neue Evaluierungen oder Zertifizierungen eingeholt werden müssen.

Im Folgenden wird die Funktionsweise eines Funkgeräts 1 gemäß Fig. 1 beschrieben. Um einen Kommunikationskanal zu einem externen Kommunikationsteilnehmer aufbauen zu können, wird zunächst zu entscheiden sein, welche Art von Funktionalität gefordert ist, um einen Kommunikationskanal aufzubauen. Beispielsweise kann eine Vorgabe sein, dass die Kommunikation verschlüsselt ablaufen soll. Überdies kann es notwendig sein, eine spezielle Wellenform oder ein spezifisches Übertragungsverfahren anzuwenden. Es ist überdies möglich, einen speziellen Betriebsmodus einzuhalten, wobei insbesondere ein definierter Standby-Modus aufrechtzuhalten sein kann.

Entsprechend der geforderten Funktionalität wird mittels des Steuersignals 9 oder mittels eines Automatismus - hier nicht dargestellt - die entsprechende Funkeinheit 2 oder 3 ausgewählt. Dazu werden die Umschalter 6, 8 mittels eines Umschalt-Signals auf die jeweilige Funkeinheit 2, 3 eingestellt. Über die gemeinsame Schnittstelle 16 wird die Funkkommunikation der jeweils anderen Funkeinheit 2, 3 überwacht. Diese Überwachung wird als Informationsaustausch bezeichnet und dient insbesondere dazu, Fehler in der Kommunikation über eine Funkeinheit 2, 3 zu erkennen und ggf. über die jeweils verbleibende andere Funkeinheit 2, 3 die Kommunikation fortzuführen. Dies stellt ein Notfallszenario dar und dient insbesondere der Sicherheit, jederzeit mittels des Funkgeräts 1 Funksignale übertragen zu können.

Die Umschaltfunktionalität über die gemeinsame Schnittstelle 16 hat insbesondere folgende Aufgaben: Bei dem Vorsehen einer Verschlüsselungseinheit in der zweiten Funkeinheit 3 ist darauf zu achten, dass beim Umschalten auf die erste Funkeinheit 2 keine sensiblen Daten übertragen werden. Dies wird über die gemeinsame Schnittstelle 16 realisiert. Überdies kann die erste Funkeinheit 2 die zweite Funkeinheit 3 überwachen und so feststellen, inwieweit die Funktionalität der zweiten Funkeinheit 3 gegeben ist. Bei Erkennen eines Fehlers wird automatisch oder über ein Steuersignal 9 auf die jeweils andere Funkeinheit umgeschaltet. Die Umschaltung kann auch durch einen Benutzer direkt am Funkgerät 1 erfolgen. Dies ermöglicht ein schnelles Handeln in Notsituationen.

In Fig. 1 ist ein Funkgerät 1 dargestellt, welches eine hohe Anzahl gemeinsamer Bauteile für die erste Funkeinheit 2 und die zweite Funkeinheit 3 aufweist. Insbesondere ist eine gemeinsame Ansteuerungsschnittstelle 7 vorgesehen, mit welcher die Daten von einem Anwender an die jeweilige Funkeinheit 2, 3 übertragen werden kann. Die Anwenderschnittstelle 7 umfasst insbesondere Pegelwandlungen, Audioverstärker, Schnittstellentreiber, Verbindung zu Leuchtanzeigen und vieles mehr.

Überdies ist für Fig. 1 eine gemeinsame Eingangsstufe 5 vorgesehen. Diese Eingangsstufe 5 wird auch als Frontend bezeichnet und umfasst insbesondere die gesamte Analogtechnik inklusive Cosite-Filter und Leistungsverstärker. Im Frontend 5 können auch digitale Anteile, beispielsweise Field Programmable Gate Arrays, kurz FPGAs, enthalten sein.

Überdies kann vorgesehen sein, die Stromversorgung sowohl über die erste Funkeinheit 2 als auch die zweite Funkeinheit 3 zu erstrecken, um sicherzustellen, dass auch bei einer Fehlfunktion der zweiten Funkeinheit 3 die Stromversorgung nicht derart belastet wird, dass das Funkgerät 1 ausfällt.

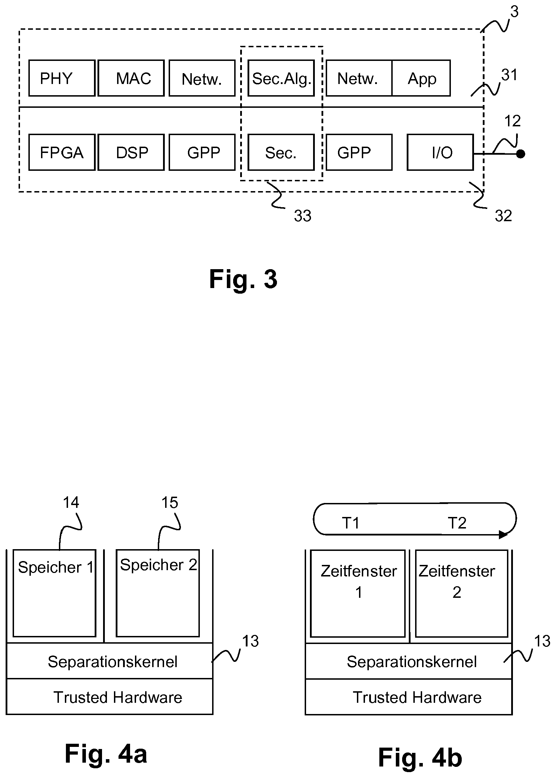

Überdies ist vorgesehen, die Funkeinheit 2 von der Funkeinheit 3 lediglich mittels Software-Technologien zu trennen, so dass über gemeinsame Hardware-Ressourcen verfügt werden kann. Dazu ist insbesondere das Betriebssystem mit einem Separations-Kernel 13 vorgesehen. Zu beachten ist, dass die gemeinsamen Funktionalitäten der Funkeinheit 2 und 3 nach strengen Evaluierungsregeln, beispielsweise einem hohen DAL entwickelt werden müssen, was zu einem hohen Entwicklungsaufwand führen kann. Die Separation mittels des Separations-Kernels 13 wird insbesondere in den Figuren 4a und 4b verdeutlicht.

Insbesondere ist das Funkgerät 1 ein Luftfahrtfunkgerät. Hierbei soll die Flexibilität und die Erweiterbarkeit einer SCA und gleichzeitig die Sicherheit einer ATC nach Standard DO-178B eingehalten werden. Dabei ist die ATC-Funktionalität in der ersten Funkeinheit 2 nach Standard DO-178B oder DO-254 möglich. Weiterhin ist eine erweiterbare SCA-Architektur mit unterschiedlichen Wellenformen über die zweite Funkeinheit 3 realisiert. Somit ist ein statisches Funkgerät 1 durch die erste Funkeinheit 2 einerseits und ein aktualisierbares dynamisches Funkgerät 1 durch die zweite Funkeinheit 3 erhalten. Das Funkgerät ist dabei in allen Teilen zertifiziert. Die Funkeinheiten 2 und 3 sind dabei mit unterschiedlichen Sicherheitsanforderungen implementiert, wobei insbesondere zwischen Safety und Security Features entschieden wird. Kryptomodule nach DO-178 und DO-254 sind sehr einfach realisierbar.

Insbesondere ist die erste Funkeinheit 2 nicht erweiterbar, so dass der Evaluierungsaufwand und die Zertifizierung gering sind. Mit einer niedrigeren Sicherheitsanforderung allerdings ebenfalls zertifiziert ist insbesondere die zweite Funkeinheit 3, welche mittels des Steuersignals 9 erweiterbar ist. Die Separierung der Funkeinheiten 2, 3 kann mittels Hardware und/oder Software realisiert werden.

In Fig. 2 ist ein zu Fig. 1 alternatives Ausführungsbeispiel eines erfindungsgemäßen Funkgeräts 1 dargestellt. Zur Vermeidung von Wiederholungen wird lediglich auf die Unterschiede der einzelnen im Funkgerät 1 angeordneten Komponenten eingegangen. Im Unterschied zu Fig. 1 weist das Funkgerät 1 gemäß Fig. 2 keine gemeinsame Antenne 4 auf, sondern für jede Funkeinheit 2, 3 ist eine separate Antenne 4a, 4b vorgesehen. Die Antennen 4a und 4b sind jeweils an getrennte Eingangsstufen 5a und 5b angeschlossen. Eine Trennung dieser Frontends 5a, 5b hat insbesondere den Vorteil, dass ein relativ einfaches Frontend 5a sehr einfach zu zertifizieren ist und einen geringen Entwicklungsaufwand aufweist, wodurch kostengünstiger entwickelt werden kann. Überdies kann in einem Standard gefordert sein, dass die zu zertifizierende Funkeinheit 2, 3 über eine exklusiv ausgestaltete Eingangsstufe 5a, 5b bzw. eine exklusive Antenne 4a, 4b verfügen muss, um zertifiziert werden zu können.

In Fig. 3 ist beispielhaft eine zweite Funkeinheit 3 mit darin enthaltenen Komponenten dargestellt. Dabei ist eine Plattformkomponente 32 in Verbindung mit einer Wellenformkomponente 31 dargestellt. Die Separation zwischen der ersten Funkeinheit 2 und der zweiten Funkeinheit 3 kann über Hardware und/oder Software erfolgen. Gemäß Fig. 3 wird die Separation über Software realisiert. Zu erkennen ist, dass ein gemeinsamer FPGA, ein gemeinsamer DSP, ein gemeinsamer Prozessor (englisch General Purpose Processor, kurz GPP), sowie eine gemeinsame Ein- und Ausgabe-Schnittstelle vorgesehen sind. Entgegen der Funkeinheit 2 weist die Funkeinheit 3 eine Verschlüsselungseinheit für das Erhalten einer Informationssicherheit auf. Dies ist durch einen speziellen Sicherheitsbaustein sowie einem darin integrierten Sicherheitsalgorithmus realisiert.

In den Fig. 4a und 4b sind verschiedene Separationsmöglichkeiten aufgezeigt, mit deren Hilfe ein Software-Separations-Kernel 13 die Separation der einzelnen Funkeinheiten 2, 3 realisiert.

Gemäß Fig. 4a ist eine Separation bezüglich eines Speicherbereichs vorgesehen. Dazu ist ein Speicher 14 für eine erste Funkeinheit 2 vorgesehen. Der Speicher 15 ist alternativ für die mit niedriger Funktionalität ausgestaltete Funkeinheit 3 vorgesehen. Die Speicherbereiche 14, 15 werden exklusiv und dynamisch zugewiesen.

Alternativ ist in Fig. 4b eine Prozesstrennung dargestellt, wobei in einem Zeitmultiplexverfahren ein erstes Zeitfenster vorgesehen ist, um Informationen über die erste Funkeinheit 2 zu übertragen, wohingegen ein zweites Zeitfenster vorgesehen ist, um Prozess-Ressourcen für die zweite Funkeinheit 3 vorzusehen. Der Separations-Kernel 13, insbesondere ein INTEGRITY-178B, LinuxWorks oder VxWorks hat insbesondere die Eigenschaften, die Ressourcen vor unautorisiertem Zugriff zu schützen, die Separation von internen Speicherbereichen und Prozessen durchzuführen, exponierte Ressourcen zu isolieren, den Informationsfluss zwischen Partition untereinander und zwischen den Partitionen und exponierten Ressourcen kontrolliert zu steuern sowie einen Audit-Service anzubieten.

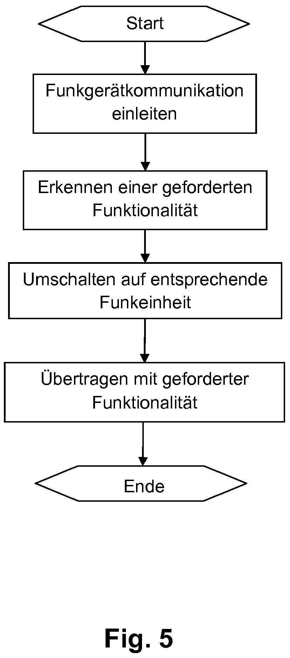

In Fig. 5 ist ein Ausführungsbeispiel eines erfindungsgemäßen Verfahrens zum Übertragen von Informationen mittels des Funkgeräts 1 dargestellt. In einem ersten Schritt wird die Funkgerätkommunikation eingeleitet. Dabei wird eine geforderte Funktionalität für die Funkgerätkommunikation erkannt, insbesondere automatisch oder über eine externe Steuerschnittstelle 9. Anschließend erfolgt die Übertragung der Informationen mit der geforderten Funktionalität.

Als Funktionalität wird insbesondere eine für die Kommunikation benötigte Eigenschaft vorgesehen, insbesondere ein Verschlüsselungsalgorithmus, eine spezifische Wellenform und/oder eine spezifische Übertragungsart.

Im Rahmen der Erfindung können alle beschriebenen und/oder gezeichneten und/oder beanspruchten Elemente beliebig miteinander kombiniert werden. Insbesondere können die Vorrichtungs- und Verfahrensmerkmale beliebig miteinander kombiniert werden.

## Patentansprüche

1. Funkgerät (1) mit zumindest einer ersten Funkeinheit (2) und einer zweiten Funkeinheit (3), wobei die erste Funkeinheit (2) eine zertifizierte Funktionalität aufweist, welche von einer autorisierten Zertifizierungsstelle zertifiziert ist,
wobei die zweite Funkeinheit (3) eine zweite zertifizierte Funktionalität aufweist, wobei die zweite Funktionalität der zweiten Funkeinheit (3) von der Funktionalität der ersten Funkeinheit (2) verschieden ist und die zweite Funktionalität der zweiten Funkeinheit (3) ebenfalls von einer autorisierten Zertifizierungsstelle zertifiziert ist,
**dadurch gekennzeichnet,**
**dass** die erste Funkeinheit (2) und die zweite Funkeinheit (3) auf gemeinsame Hardwareressourcen des Funkgeräts (1) zugreifen, wobei die erste Funkeinheit (2) von der zweiten Funkeinheit (3) mittels eines Software-Separationskernels (13) voneinander funktional getrennt ist.

2. Funkgerät nach Anspruch 1,
wobei das Zertifikat der ersten Funkeinheit (2) ein Sicherheitszertifikat ist.

3. Funkgerät nach einem der vorhergehenden Ansprüche,
wobei das Zertifikat der zweiten Funkeinheit (3) ein Informationszertifikat ist.

4. Funkgerät nach einem der vorhergehenden Ansprüche,
wobei die zweite Funkeinheit (3) hinsichtlich ihrer zweiten Funktionalität erweiterbar ist, wobei das Zertifikat durch die Erweiterung weiterhin gültig ist.

5. Funkgerät nach einem der vorhergehenden Ansprüche,
wobei jede der Funkeinheiten (2,3) eine separate Antenne mit eigener Eingangsstufe (5a, 5b) aufweist.

6. Funkgerät nach einem der vorhergehenden Ansprüche,
wobei die erste Funkeinheit (2) mit der zweiten Funkeinheit (3) über eine gemeinsame Schnittstelle (16) Informationen (10) austauscht.

7. Funkgerät nach einem der vorhergehenden Ansprüche,
wobei das Funkgerät eine Ansteuerungsschnittstelle (7) aufweist, worüber die erste Funkeinheit (2) und die zweite Funkeinheit (3) über die Ansteuerschnittstelle (7) Ansteuerungsdaten empfangen und/oder versenden.

8. Funkgerät nach einem der vorhergehenden Ansprüche,
wobei eine der Funkeinheiten (2, 3) eine Steuereinheit (18) aufweist, wobei die Steuereinheit (18) den Hochfahrprozess und den Abschaltprozess des Funkgeräts (1) steuert.

9. Funkgerät nach einem der vorhergehenden Ansprüche,
wobei ein Umschalten zwischen der ersten Funkeinheit (2) und der zweiten Funkeinheit (3) mittels eines externen Steuersignals (9) erfolgt.

10. Verfahren zum Übertragen von Informationen mittels eines Funkgeräts (1) gemäß einem der vorhergehenden Ansprüche mit den Verfahrensschritten:
- Erkennen der für die Übertragung der Informationen geforderten Funktionalität; und
- Umschalten des Funkgeräts (1) auf die für die geforderte Funktionalität geeignete Funkeinheit (2, 3).

11. Verfahren gemäß Anspruch 10,
wobei die Funkeinheiten (2, 3) die Informationen in definierten Zeitschlitzen übertragen.

12. Verfahren nach Anspruch 10 oder 11,
wobei die erste Funkeinheit (2) auf einen ersten Speicherbereich (14) zugreift, während die zweite Funkeinheit (3) auf einen vom ersten Speicherbereich (14) verschiedenen zweiten Speicherbereich (15) zugreift und wobei der erste Speicherbereich (14) und der zweite Speicherbereich (15) von einer gemeinsamen Sicherheitsplattform angesteuert werden.

13. Verfahren nach einem der Ansprüche 10 bis 12,
wobei die zweite Funkeinheit (3) über eine Datenschnittstelle (12) mit weiteren Funktionen erweitert wird.

14. Verfahren nach einem der Ansprüche 10 bis 13,
wobei bei einer bestehenden Kommunikationsverbindung mittels der zweiten Funkeinheit (3) über die erste Funkeinheit (2) angeklopft wird und wobei bei Erkennen des Anklopfens ein Umschalten von der zweiten Funkeinheit (3) auf die erste Funkeinheit (2) erfolgt.

## Claims

1. Radio device (1) with at least a first radio unit (2) and a second radio unit (3), wherein the first radio unit (2) has a certified functionality which is certified by an authorised certification authority, wherein the second radio unit (3) has a second certified functionality, wherein the second functionality of the second radio unit (3) is different to the functionality of the first radio unit (2) and the second functionality of the second radio unit (3) is also certified by an authorised certification authority,
**characterised in that** the first radio unit (2) and the second radio unit (3) access common hardware resources of the radio device (1), wherein the first radio unit (2) is separated functionally from the second radio unit (3) by means of a software separation kernel (13).

2. Radio device according to claim 1, wherein the certificate of the first radio unit (2) is a security certificate.

3. Radio device according to one of the preceding claims, wherein the certificate of the second radio unit (3) is an information certificate.

4. Radio device according to one of the preceding claims, wherein the second radio unit (3) is expandable with regard to its second functionality, and wherein the certificate is still valid through the expansion.

5. Radio device according to one of the preceding claims, wherein each of the radio units (2, 3) has a separate antenna with its own input stage (5a, 5b).

6. Radio device according to one of the preceding claims, wherein the first radio unit (2) exchanges information (10) with the second radio unit (3) through a common interface (16).

7. Radio device according to one of the preceding claims, wherein the radio device has an actuating interface (7) through which the first radio unit (2) and the second radio unit (3) receive and/or send actuating data through the actuating interface (7).

8. Radio device according to one of the preceding claims, wherein one of the radio units (2, 3) has a control unit (18), and wherein the control unit (18) controls the boot-up process and the shutdown process of the radio device (1).

9. Radio device according to one of the preceding claims, wherein a switchover is effected between the first radio unit (2) and the second radio unit (3) by means of an external control signal (9).

10. Method for transmission of information by means of a radio device (1) according to one of the preceding claims with the method steps:
- recognition of the functionality required for the transmission of the information; and
- switchover of the radio device (1) to the radio unit (2, 3) that is appropriate for the required functionality.

11. Method according to claim 10, wherein the radio units (2, 3) transmit the information in defined time slots.

12. Method according to claim 10 or 11, wherein the first radio unit (2) accesses a first memory area (14) while the second radio unit (3) accesses a second memory area (15) different to the first memory area (14) and wherein the first memory area (14) and the second memory area (15) are actuated from a common security platform.

13. Method according to one of claims 10 to 12, wherein the second radio unit (3) is expanded through a data interface (12) with further functions.

14. Method according to one of claims 10 to 13, wherein with an existing communications connection by means of the second radio unit (3) a hailing function is effected through the first radio unit (2) and wherein on recognition of the hailing function a switchover is effected from the second radio unit (3) to the first radio unit (2).

## Revendications

1. Appareil radio (1) comprenant au moins une première unité radio (2) et une deuxième unité radio (3), la première unité radio (2) présentant une fonctionnalité certifiée, laquelle est certifiée par un organisme de certification autorisé,
la deuxième unité radio (3) présentant une deuxième fonctionnalité certifiée, la deuxième fonctionnalité de la deuxième unité radio (3) étant différente de la fonctionnalité de la première unité radio (2) et la deuxième fonctionnalité de la deuxième unité radio (3) étant également certifiée par un organisme de certification autorisé,
**caractérisé en ce que**
la première unité radio (2) et la deuxième unité radio (3) accèdent aux ressources matérielles communes de l'appareil radio (1), la première unité radio (2) étant séparée fonctionnellement de la deuxième unité radio (3) au moyen d'un noyau de séparation de logiciel (13).

2. Appareil radio selon la revendication 1,
le certificat de la première unité radio (2) étant un certificat de sécurité.

3. Appareil radio selon l'une quelconque des revendications précédentes,
le certificat de la deuxième unité radio (3) étant un certificat d'information.

4. Appareil radio selon l'une quelconque des revendications précédentes, la deuxième fonctionnalité de la deuxième unité radio (3) pouvant être élargie, le certificat étant toujours valable à la suite de cet élargissement.

5. Appareil radio selon l'une quelconque des revendications précédentes, chacune des unités radio (2, 3) comprenant une antenne séparée présentant un étage d'entrée (5a, 5b) propre.

6. Appareil radio selon l'une quelconque des revendications précédentes, la première unité radio (2) échangeant des informations (10) avec la deuxième unité radio (3) par l'intermédiaire d'une interface (16) commune.

7. Appareil radio selon l'une quelconque des revendications précédentes, l'appareil radio comprenant une interface de commande (7), par l'intermédiaire de laquelle la première unité radio (2) et la deuxième unité radio (3) reçoivent et/ou envoient des données de commande par l'intermédiaire de l'interface de commande (7).

8. Appareil radio selon l'une quelconque des revendications précédentes, l'une des unités radio (2, 3) comprenant une unité de commande (18), l'unité de commande (18) commandant le processus de mise en route et le processus de mise à l'arrêt de l'appareil radio (1).

9. Appareil radio selon l'une quelconque des revendications précédentes, un basculement entre la première unité radio (2) et la deuxième unité radio (3) étant réalisé au moyen d'un signal de commande externe (9).

10. Procédé de transmission d'informations au moyen d'un appareil radio (1) selon l'une quelconque des revendications précédentes, comprenant les étapes de procédé suivantes :
- détecter la fonctionnalité exigée pour la transmission des informations ; et
- faire basculer l'appareil radio (1) sur l'unité radio (2, 3) adaptée à la fonctionnalité exigée.

11. Procédé selon la revendication 10,
les unités radio (2, 3) transmettant les informations pendant des intervalles de temps définis.

12. Procédé selon la revendication 10 ou 11,
la première unité radio (2) accédant à une première zone de mémoire (14), tandis que la deuxième unité radio (3) accède à une deuxième zone de mémoire (15) différente de la première zone de mémoire (14) et la première zone de mémoire (14) et la deuxième zone de mémoire (15) étant commandées par une plateforme de sécurité commune.

13. Procédé selon l'une quelconque des revendications 10 à 12,
la deuxième unité radio (3) étant étendue à d'autres fonctions par l'intermédiaire d'une interface de données (12).

14. Procédé selon l'une quelconque des revendications 10 à 13,
une signalisation d'appel en instance étant réalisée dans le cas d'une liaison de communication existante au moyen de la deuxième unité radio (3) par l'intermédiaire de la première unité radio (2) et, lors de la détection du signal d'appel en attente, un basculement de la deuxième unité radio (3) sur la première unité radio (2) étant réalisé.
